# EUROPEAN PATENT APPLICATION

(11) **EP 3 744 801 A1**
(43) Date of publication of application: **02.12.2020**
(21) Application number: 19744423.5
(22) Date of filing: 18.01.2019
(51) Int. Cl.: C09D 183/06, B05D 7/00, B05D 7/24, C09D 7/20, C09D 7/63

(54) **COATING AGENT COMPOSITION AND METHOD FOR COATING STRUCTURE**

(30) Priority: 24.01.2018 JP 2018009457
(71) Applicant: Dow Toray Co., Ltd., Tokyo 140-8617 (JP)
(72) Inventor: MORI, Hideyuki, Ichihara-shi, Chiba 299-0108 (JP); SAKASHITA, Tomoyuki, Tokyo 140-8617 (JP)
(74) Representative: Murgitroyd & Company
(86) International application number: PCT/JP2019/001477
(87) International publication number: WO 2019/146523

(57) **Abstract**

The present invention relates to a coating agent composition comprising: (A) an organopolysiloxane resin that is solid at 25°C, including a siloxane unit represented by the general formula: R¹₃SiO_{1/2} and a siloxane unit represented by the formula: SiO_{4/2}, a molar ratio of the siloxane unit represented by the formula: R₃SiO_{1/2} to the siloxane unit represented by the formula: SiO_{4/2} being from 0.5 to 1.2; (B) an organopolysiloxane that is liquid at 25°C, including in a molecule at least two silicon atom-bonded hydrolyzable groups or hydroxyl groups; (C) a silane compound or a partially hydrolyzed condensate thereof; (D) any catalyst for condensation reaction; and (E) an organic solvent. The present composition has excellent adhesion to a structure such as mortar and concrete, or a primer layer or an intermediate coating layer on the surface thereof, and can form a thin cured film with low surface tack.

## Description

### [TECHNICAL FIELD]

The present invention relates to a coating agent composition suitable for protecting or covering a structure such as mortar and concrete, and a method for coating structure using the composition.

### [BACKGROUND ART]

Room temperature curable silicone compositions that cure with moisture in the air are easy to handle and form cured products with excellent weather resistance, and are thus used as sealing materials for building materials. To improve the physical properties of the cured product, blending of an organopolysiloxane resin containing a triorganosiloxane (M) unit (i.e., R₃SiO_{1/2} unit, wherein R represents a monovalent hydrocarbon group) and a silicate (Q) unit (i.e., SiO_{4/2} unit) is proposed (Patent Documents 1 and 2).

However, in a case where such room temperature curable silicone compositions are applied to a structure such as mortar and concrete, or a primer layer or an intermediate coating layer on the surface thereof, they have problems such as difficulty of forming a thin film and high surface tack of the resulting cured film.

In addition, hot melt type room temperature curable silicone compositions have also been proposed (Patent Documents 3 to 6). However, since these hot melt type room temperature curable silicone compositions are melted by heating and applied to a substrate, they have problems such as difficulty of forming a thin film, need for special coating equipment, and difficulty of uniformly coating a substrate having a large area. Patent Documents 3 to 6 do not describe the use of these hot melt type room temperature curable silicone compositions by dissolving them in an organic solvent.

The present inventors have changed this hot melt type room temperature curable silicone composition to a solvent type that is different from the original use, and have found that it has good adhesion to a structure such as mortar and concrete, or a primer layer or an intermediate coating layer on the surface thereof, and forms a thin cured film with low surface tack, and have accomplished the present invention.

### [Prior Art Documents]

### [Patent Documents]

Patent Document 1: Japanese Unexamined Patent Application Publication No. S54-034363
Patent Document 2: Japanese Unexamined Patent Application Publication No. 2002-327115
Patent Document 3: Japanese Unexamined Patent Application Publication No. H07-051624
Patent Document 4: Japanese Unexamined Patent Application Publication No. H07 -053942
Patent Document 5: Japanese Unexamined Patent Application Publication No. H07 -070516
Patent Document 6: Japanese Unexamined Patent Application Publication No. H07 -070541

### [SUMMARY OF THE INVENTION]

### [Problems to be Solved by the Invention]

An object of the present invention is to provide a coating agent composition and a method for coating structure using the composition, the composition having excellent adhesion to a structure such as mortar and concrete, or a primer layer or an intermediate coating layer on the surface thereof, and forming a thin cured film with low surface tack.

### [Means for Solving the Problems]

The coating agent composition according to the present invention comprises the following components (A) to (E):
(A) an organopolysiloxane resin that is solid at 25°C, including a siloxane unit represented by the general formula: R¹₃SiO_{1/2} and a siloxane unit represented by the formula: SiO_{4/2}, a molar ratio of the siloxane unit represented by the formula: R₃SiO_{1/2} to the siloxane unit represented by the formula: SiO_{4/2} being from 0.5 to 1.2, wherein R¹s are the same or different unsubstituted or halogen-substituted monovalent hydrocarbon groups having 1 to 12 carbon atoms; groups represented by the general formula:

   X₍₃₋ₐ₎R²ₐSiO-

   wherein R²s are the same or different unsubstituted or halogen-substituted monovalent hydrocarbon groups having 1 to 12 carbon atoms, X is a hydrolyzable group, and "a" is 0, 1, or 2; groups represented by the general formula:

   X₍₃₋ₐ)R³ₐSi-[R⁴-SiR³₂(OSiR³₂)ₘOSiR³₂]ₙ-R⁴-

   wherein R³s are the same or different unsubstituted or halogen-substituted monovalent hydrocarbon groups having 1 to 12 carbon atoms and no aliphatic unsaturated bond, R⁴s are the same or different alkylene groups having 2 to 12 carbon atoms, X and "a" are the same as described above, "m" is an integer of 0 to 10, and "n" is 0 or 1; hydrogen atoms, or hydroxyl groups;
(B) an organopolysiloxane that is liquid at 25°C, including in a molecule at least two silicon atom-bonded groups represented by the general formula:

   X₍₃₋ₐ₎R²ₐSiO-

   wherein R², X, and "a" are the same as described above; groups represented by the general formula:

   X₍₃₋ₐ₎R³ₐSi-[R⁴-SiR³₂(OSiR³₂)ₘOSiR³₂]ₙ-R⁴-

   wherein R³, R⁴, X, "a", "m", and "n" are the same as described above; or hydroxyl groups, in an amount such that a mass ratio of component (A): component (B) is from 45:55 to 80:20;
(C) a silane compound represented by the formula:

   R²_{(4-b)}SiX_{b}

   wherein R² and X are the same as described above, and "b" is 2, 3, or 4; or a partially hydrolyzed condensate thereof, in an amount of from 0.1 to 30 parts by mass with respect to 100 parts by mass of the total of components (A) and (B);
(D) any condensation reaction catalyst for accelerating curing of the composition; and
(E) an organic solvent, in an amount of from 20 to 2,000 parts by mass with respect to 100 parts by mass of the total of components (A) and (B).

In the present composition, X in component (C) is preferably a methoxy group or an ethoxy group. Such component (C) is preferably isobutyltrimethoxysilane, methyltrimethoxysilane, phenyltrimethoxysilane, propyltrimethoxysilane, tetramethoxysilane, or tetraethoxysilane.

In the present composition, X in component (C) is preferably an acetoxy group, an acetamide group, an N-methylacetamide group, or a ketoxime group. Such component (C) is preferably methyltris(methylethylketoximo)silane or vinyltris(methylethylketoximo)silane.

In the method for coating structure of the present invention, the above-mentioned coating agent composition is applied to a mortar or concrete structure, and cured after removal of a part or all of component (E), or while removing component (E).

### [Effects of the Invention]

The coating agent composition of the present invention has excellent adhesion to a structure such as mortar and concrete, or a primer layer or an intermediate coating layer on the surface thereof, and can form a thin cured film having low surface tack.

### [Mode for Carrying Out the Invention]

### [Coating agent composition]

First, the coating agent composition of the present invention will be described in detail.

An organopolysiloxane resin for component (A) is solid at 25°C, and includes a siloxane unit represented by the general formula: R¹₃SiO_{1/2} and a siloxane unit represented by the formula: SiO_{4/2}.

In the formula, R¹s are the same or different unsubstituted or halogen-substituted monovalent hydrocarbon groups having 1 to 12 carbon atoms, groups represented by the general formula:

X₍₃₋ₐ₎R²ₐSiO-,

groups represented by the general formula:

X₍₃₋ₐ₎R³ₐSi-[R⁴-SiR³₂(OSiR³₂)ₘOSiR³₂]ₙ-R⁴-,

hydrogen atoms, or hydroxyl groups.

Examples of the monovalent hydrocarbon group represented by R¹ include alkyl groups such as methyl groups, ethyl groups, propyl groups, and butyl groups; alkenyl groups such as vinyl groups and allyl groups; aryl groups such as phenyl groups, tolyl groups, and naphthyl groups; aralkyl groups such as benzyl groups, phenylethyl groups, and phenylpropyl groups; and halogenated hydrocarbon groups such as chloromethyl groups, trifluoropropyl groups, and chloropropyl groups.

In the formula, R² are the same or different unsubstituted or halogen-substituted monovalent hydrocarbon groups having 1 to 12 carbon atoms, and examples thereof include the same groups as those listed for the above-described R¹.

In the formula, R³ are the same or different unsubstituted or halogen-substituted monovalent hydrocarbon groups having 1 to 12 carbon atoms and no aliphatic unsaturated bond, and examples thereof include alkyl groups such as methyl groups, ethyl groups, propyl groups, and butyl groups; aryl groups such as phenyl groups, tolyl groups, and naphthyl groups; aralkyl groups such as benzyl groups, phenylethyl groups, and phenylpropyl groups; and halogenated hydrocarbon groups such as chloromethyl groups, trifluoropropyl groups, and chloropropyl groups.

Further, in the formula, R⁴ are the same or different alkylene groups having 2 to 12 carbon atoms, and examples thereof include ethylene groups, propylene groups, butylene groups, pentylene groups, and hexylene groups.

Further, in the formula, X is a hydrolyzable group, and examples thereof include alkoxy groups such as methoxy groups, ethoxy groups, and propoxy groups; oxime groups such as acetooxime groups and methylethylketoxime groups; amino groups such as dimethylamino groups and diethylamino groups; amide groups such as N-methylacetamide groups; aminooxy groups such as diethylaminooxy group; and alkenyloxy groups such as isopropenyloxy groups.

In the formula, "a" is 0, 1, or 2, and preferably 0.

In the formula, "m" is an integer of 0 to 10, preferably 0.

In the formula, "n" is 0 or 1.

Component (A) includes a siloxane unit represented by the general formula: R¹₃SiO_{1/2} and a siloxane unit represented by the formula: SiO_{4/2}, and may include a siloxane unit represented by the general formula: R¹₂SiO_{2/2} and a siloxane unit represented by the general formula: R¹SiO_{3/2} within a range that does not impair the object of the present invention. In component (A), the molar ratio of the siloxane unit represented by the formula: R₃SiO_{1/2} to the siloxane unit represented by the formula: SiO_{4/2} is in a range of from 0.5 to 1.2, and preferably from 0.6 to 0.8. The reason for this is that good compatibility with component (B) and good solubility for component (E) are achieved, and a solid or semi-solid film can be formed at 25°C after removing component (E) from the composition.

Component (B) is an organopolysiloxane that is liquid at 25°C, including in a molecule at least two silicon atom-bonded groups represented by the general formula:

X₍₃₋ₐ₎R²ₐSiO-,

groups represented by the general formula:

X₍₃₋ₐ₎R³ₐSi-[R⁴-SiR³₂(OSiR³₂)ₘOSiR³₂]ₙ-R⁴-,

or hydroxyl groups.

In the formula, R², R³, R⁴, X, "a", "m", and "n" are the same as described above.

In component (B), examples of the other group bonded to silicon atom include unsubstituted or halogen-substituted monovalent hydrocarbon groups having 1 to 12 carbon atoms, and specific examples thereof include alkyl groups such as methyl groups, ethyl groups, propyl groups, and butyl groups; alkenyl groups such as vinyl groups and allyl groups; aryl groups such as phenyl groups, tolyl groups, and naphthyl groups; aralkyl groups such as benzyl groups, phenylethyl groups, and phenylpropyl groups; and halogenated hydrocarbon groups such as chloromethyl groups, trifluoropropyl groups, and chloropropyl groups.

A viscosity of component (B) is not limited as long as it is liquid at 25°C, but is preferably in a range of from 100 to 1,000,000 mPa·s, or from 200 to 100,000 mPa·s for achieving excellent coating workability of the present composition and good mechanical properties of the cured film to be obtained.

A molecular structure of component (B) is not limited, but is preferably a straight-chain or partially branched straight-chain. Component (B) is preferably a diorganopolysiloxane having groups represented by the general formula:

X₍₃₋ₐ₎R²ₐSiO-,

groups represented by the general formula:

X₍₃₋ₐ₎R³ₐSi-[R⁴-SiR³₂(OSiR³₂)ₘOSiR³₂]ₙ-R⁴-,

or hydroxyl groups at silicon atoms at both ends of the molecular chain.

A content of component (B) is such that a mass ratio of component (A) to component (B) is from 45:55 to 80:20, preferably from 50:50 to 80:20. The reason for this is as follows: when the content of component (B) is within the above-described mass ratio, excellent adhesion to structures such as mortar and concrete, or a primer layer or an intermediate coating layer on the surface thereof is achieved, and a cured film is formed with low surface tack.

Component (C) is a silane compound represented by the general formula:

R²_{(4-b)}SiX_{b},

or a partially hydrolyzed condensate thereof.

In the formula, R² and X are the same as described above.

Furthermore, in the formula, "b" is 2, 3, or 4, and preferably 3 or 4.

Examples of component (C) include methyltrimethoxysilane, methyltriethoxysilane, propyltrimethoxysilane, tetramethoxysilane, tetraethoxysilane, phenyltrimethoxysilane, isobutyltrimethoxysilane, methyltris(methylethylketoximo)silane, and vinyltris(methylethylketoximo)silane.

A content of component (C) is in a range of from 0.1 to 30 parts by mass, preferably from 0.1 to 20 parts by mass, from 0.5 to 20 parts by mass, from 0.1 to 15 parts by mass, from 0.5 to 10 parts by mass, from 0.1 to 10 parts by mass, from 0.5 to 10 parts by mass, from 0.1 to 5 parts by mass, or from 0.5 to 5 parts by mass with respect to 100 parts by mass of the total of components (A) and (B). The reason for this is as follows: when the content of component (C) is within the above range, curability and stability of the present composition are improved.

Component (D) is any condensation reaction catalyst for accelerating curing of the present composition. Examples of component (D) include organic titanium compounds and organic tin compounds. Examples of the organic titanium compounds include tetra(i-propoxy) titanium, tetra(n-butoxy)titanium, tetra(t-butoxy)titanium, and other titanates; di(i-isopropoxy) bis(ethyl acetoacetate)titanium, di(i-propoxy) bis(methyl acetoacetate)titanium, di(i-propoxy) bis (acetylacetone)titanium, and other titanium chelates. Examples of the organic tin compounds include dibutyltin dilaurate, dibutyltin diacetate, and dibutyltin dioctoate.

Containing component (D) is optional. When component (D) is contained, a content thereof is preferably in a range of from 0.5 to 10 parts by mass, or in a range of from 1 to 5 parts by mass with respect to 100 parts by mass of the total of components (A) and (B). The reason for this is as follows: when the content of component (D) is not less than the lower limit of the above range, curing of the present composition is accelerated, while it is not more than the upper limit of the above range, storage stability of the present composition is improved.

Component (E) is an organic solvent. Examples of component (E) include normal hexane, toluene, xylene, and cellosolve acetate.

A content of component (E) is in a range of from 20 to 2,000 parts by mass with respect to 100 parts by mass of the total of components (A) and (B), and preferably in a range of from 50 to 2,000 parts by mass or in a range of from 50 to 1,500 parts by mass for achieving good applicability, while preferably in a range of from 20 to 1,200 parts by mass, or within a range of from 20 to 1,000 parts by mass for achieving good film-forming property. For satisfying both properties, the content is preferably in a range of from 50 to 1,200 parts by mass, from 50 to 1,000 parts by mass, from 50 to 800 parts by mass, or from 50 to 500 parts by mass.

The present composition may include, for example, an inorganic filler, a fungicide, a flame retardant, a heat-resistant agent, a plasticizer, a thixotropy-imparting agent, an adhesion-imparting agent, a pigment, or an antioxidant within the range not impairing the object of the present invention.

The present composition comprises components (A) to (E) mentioned above, and is cured by a condensation reaction with moisture in the air after removing component (E) or while removing component (E). Such a composition is suitable as a coating agent composition for a mortar or concrete structure.

### [Method for coating structure]

Next, the method for coating structure of the present invention will be described in detail.

In the present method, the coating agent composition described above is applied to a mortar or concrete structure. This coating method is not limited, and known methods such as brush coating, roller coating, and spray coating can be applied.

Examples of the structure to which the present method can be applied include road and rail tunnels, and road and rail piers. The surface of this structure may be preliminarily treated with a primer and further intermediately coated. The primer and the intermediate coating agent are not particularly limited as long as they can be generally applied to mortar or concrete structures.

Next, after removing a part or all of component (E) from the coating film of the present composition, or while removing component (E), the composition can be cured by a condensation reaction with moisture in the air. According to the present method, it is not necessary to further apply an overcoating agent to the surface of the structure, so that the construction period can be significantly reduced.

### [EXAMPLES]

The coating agent composition and the method for coating structure of the present invention will be described in detail with reference to examples and comparative examples. Note that viscosities are values at 25°C. Evaluation of the coating agent composition was performed as follows. Adhesion to a primer layer or intermediate coating layer on a surface of structures such as concrete was evaluated in terms of adhesion to a PET film.

<Adhesion>

The coating agent composition was applied to a PET film having a thickness of 50 µm to have a thickness of about 500 µm, and cured at 25°C over 24 hours while removing the organic solvent. Thereafter, a cut was made in the end of the PET film, and both ends of the PET film were pulled outward to cut the PET film and the cured film thereon. At this time, the cut surface was visually observed; when the cured film was not peeled from the PET film, the adhesion was judged to be "good", and when the cured film was peeled from the PET film or a part of the cured film was floating, the adhesion was judged to be "poor".

### <Applicability>

The applicability was confirmed during the adhesion test. Specifically, when a solid or semi-solid uncured film having a thickness of 500 µm or less was formed, the applicability was judged to be "good", and a solid or semi-solid uncured film having a thickness of 500 µm or less was not formed or a liquid film was formed, the applicability was judged to be "poor".

### <Film-forming property>

The film-forming property was confirmed during the adhesion test. Specifically, the cured film on the PET film surface was pulled, and whether the cured film had any elongation or not was observed; when there was elongation, the film-forming property was judged to be "good", and when elongation was poor, the film-forming property was judged to be "poor".

### <Surface tack>

After the adhesion test, the surface of the cured film was touched with a finger to check for surface tack.

### [Example 1]

In an environment that was protected from moisture, 65 parts by mass of an organopolysiloxane resin that is solid at 25°C, including a siloxane unit represented by the formula: (CH₃)₃SiO_{1/2} and a siloxane unit represented by the formula: SiO_{4/2}, the molar ratio of the siloxane unit represented by the formula: (CH₃)₃SiO_{1/2} to the siloxane unit represented by the formula: SiO_{4/2} being 0.65, 35 parts by mass of dimethylpolysiloxane having a viscosity of 65,000 mPa·s and groups represented by the formula:

(CH₃O)₃Si-C₂H₄-Si(CH₃)₂OSi(CH₃)₂-C₂H₄-

at the silicon atoms at both ends of the molecular chain, 2 parts by mass of isobutyltrimethoxysilane, 0.2 parts by mass of tetra(t-butoxy)titanium, and 100 parts by mass of xylene were blended to prepare a coating agent composition. Table 1 shows the evaluation results of the coating agent composition.

### [Example 2]

A coating agent composition was prepared in the same manner as in Example 1 except that the amount of xylene was changed to 30 parts by mass. Table 1 shows the evaluation results of the coating agent composition.

### [Example 3]

A coating agent composition was prepared in the same manner as in Example 1 except that the amount of xylene was changed to 1,500 parts by mass. Table 1 shows the evaluation results of the coating agent composition.

### [Example 4]

In an environment that was protected from moisture, 57 parts by mass of an organopolysiloxane resin that is solid at 25°C, including a siloxane unit represented by the formula: (CH₃)₃SiO_{1/2} and a siloxane unit represented by the formula: SiO_{4/2}, a molar ratio of the siloxane unit represented by the formula: (CH₃)₃SiO_{1/2} to the siloxane unit represented by the formula: SiO_{4/2} being 0.65, 43 parts by mass of dimethylpolysiloxane having a viscosity of 15,000 mPa·s and hydroxyl groups bonded to the silicon atoms at both ends of the molecular chain, 2 parts by mass of methyltrioxime silane, 0.2 parts by mass of dimethyltin dineodecanate, and 100 parts by mass of xylene were blended to prepare a coating agent composition. Table 1 shows the evaluation results of the coating agent composition.

### [Comparative Example 1]

A coating agent composition was prepared in the same manner as in Example 1 except that the organopolysiloxane resin was not blended. Table 1 shows the evaluation results of the coating agent composition.

### [Comparative Example 2]

A coating agent composition was prepared in the same manner as in Example 4 except that the organopolysiloxane resin was not blended. Table 1 shows the evaluation results of the coating agent composition.

### [Comparative Example 3]

A coating agent composition was prepared in the same manner as in Example 4 except that the amounts of the organopolysiloxane resin and the dimethylpolysiloxane were changed to 40 parts by mass and 60 parts by mass, respectively. Table 1 shows the evaluation results of the coating agent composition.

**[Table 1]**

| | Example | | | | Comparative Example | | |
|---|---|---|---|---|---|---|---|
| | 1 | 2 | 3 | 4 | 1 | 2 | 3 |
| Adhesion | Good | Good | Good | Good | Poor | Poor | Good |
| Applicability | Good | Poor | Good | Good | Good | Good | Good |
| Film forming property | Good | Good | Poor | Good | Good | Good | Good |
| Surface tack | Absent | Absent | Absent | Absent | Absent | Absent | Present |

### [Industrial Applicability]

The coating agent composition of the present invention has excellent adhesion to a structure such as mortar and concrete, or a primer layer or an intermediate coating layer on the surface thereof, and can form a thin cured film with low surface tack after curing. The composition is thus useful as a protective material or a topcoat material for structures such as mortar and concrete.

## Claims

1. A coating agent composition comprising the following components (A) to (E):
(A) an organopolysiloxane resin that is solid at 25°C, including a siloxane unit represented by the general formula: R¹₃SiO_{1/2} and a siloxane unit represented by the formula: SiO_{4/2}, a molar ratio of the siloxane unit represented by the formula: R₃SiO_{1/2} to the siloxane unit represented by the formula: SiO_{4/2} being from 0.5 to 1.2, wherein R¹s are the same or different unsubstituted or halogen-substituted monovalent hydrocarbon groups having 1 to 12 carbon atoms; groups represented by the general formula:
X₍₃₋ₐ₎R²ₐSiO-
wherein R²s are the same or different unsubstituted or halogen-substituted monovalent hydrocarbon groups having 1 to 12 carbon atoms, X is a hydrolyzable group, and "a" is 0, 1, or 2; groups represented by the general formula:
X₍₃₋ₐ₎R³ₐSi-[R⁴-SiR³₂(OSiR³₂)ₘOSiR³₂]ₙ-R⁴-
wherein R³s are the same or different unsubstituted or halogen-substituted monovalent hydrocarbon groups having 1 to 12 carbon atoms and no aliphatic unsaturated bond, R⁴s are the same or different alkylene groups having 2 to 12 carbon atoms, X and "a" are the same as described above, "m" is an integer of 0 to 10, and "n" is 0 or 1; hydrogen atoms, or hydroxyl groups;
(B) an organopolysiloxane that is liquid at 25°C, including in a molecule at least two silicon atom-bonded groups represented by the general formula:
X₍₃₋ₐ₎R²ₐSiO-
wherein R², X, and "a" are the same as described above; groups represented by the general formula:
X₍₃₋ₐ₎R³ₐSi-[R⁴-SiR³₂(OSiR³₂)ₘOSiR³₂]ₙ-R⁴-
wherein R³, R⁴, X, "a", "m", and "n" are the same as described above; or hydroxyl groups, in an amount such that a mass ratio of component (A): component (B) is from 45:55 to 80:20;
(C) a silane compound represented by the formula:
R²_{(4-b)}SiX_{b}
wherein R² and X are the same as described above, and "b" is 2, 3, or 4; or a partially hydrolyzed condensate thereof, in an amount of from 0.1 to 30 parts by mass with respect to 100 parts by mass of the total of components (A) and (B);
(D) any condensation reaction catalyst for accelerating curing of the composition; and
(E) an organic solvent, in an amount of from 20 to 2,000 parts by mass with respect to 100 parts by mass of the total of components (A) and (B).

2. The coating agent composition according to claim 1, wherein X in component (C) is a methoxy group or an ethoxy group.

3. The coating agent composition according to claim 1, wherein component (C) is isobutyltrimethoxysilane, methyltrimethoxysilane, phenyltrimethoxysilane, propyltrimethoxysilane, tetramethoxysilane, or tetraethoxysilane.

4. The coating agent composition according to claim 1, wherein X in component (C) is an acetoxy group, an acetamide group, an N-methylacetamide group, or a ketoxime group.

5. The coating agent composition according to claim 1, wherein component (C) is methyltris(methylethylketoximo)silane or vinyltris(methylethylketoximo)silane.

6. The coating agent composition according to any one of claims 1 to 5, which is for a mortar or concrete structure.

7. A method for coating structure, comprising:
applying the coating agent composition described in any one of claims 1 to 5 to a mortar or concrete structure; and
curing the composition after removing part or all of component (E), or while removing component (E).
